# EUROPÄISCHE PATENTSCHRIFT

(11) **EP 2 236 312 B1**
(45) Veröffentlichungstag und Bekanntmachung des Hinweises auf die Patenterteilung: **11.11.2015**
(21) Anmeldenummer: 10156912.7
(22) Anmeldetag: 18.03.2010
(51) Int. Cl.: B44C 1/22, B44C 5/04, B41M 5/26, C03C 23/00, H05B 6/12, C03C 17/00

(54) **Platte mit einem durchsichtigen Grundkörper für ein Haushaltsgerät**
Board with a translucent base body for a household device
Plaque dotée d'un corps de base transparent pour un appareil ménager

(30) Priorität: 03.04.2009 ES 200930036
(43) Veröffentlichungstag der Anmeldung: 06.10.2010
(73) Patentinhaber: BSH Hausgeräte GmbH, 81739 München (DE)
(72) Erfinder: Buñuel Magdalena, Miguel Angel, 50017 Zaragoza (ES); Ceamanos Gaya, Jesús, 50016 Zaragoza (ES); Delgado Alguacil, José David, 50.018 Zaragoza (ES); Garcia Jiménez, Jose Ramon, 50009 Zaragoza (ES); Peña Torre, José Ignacio, 50004 Zaragoza (ES); Schmalenstrot, Rene, 50010 Zaragoza (ES); Sola Martinez, Daniel, 50012 Zaragoza (ES)

(56) Entgegenhaltungen:
- DE-A1-102006 017 250
- DE-B3-102008 004 995
- DE-U1- 20 005 461
- DE-U1-202004 015 925

## Beschreibung

Die Erfindung betrifft eine Platte mit einem durchsichtigen Grundkörper für ein Haushaltsgerät, wobei der durchsichtige Grundkörper mindestens eine als Ornament ausgestaltete dreidimensionale Laserstruktur aufweist, wobei die mindestens eine Laserstruktur zumindest teilweise mit einer im Wesentlichen lichtundurchlässigen Schicht hinterlegt ist, die als Beschichtung oder Bedruckung auf eine Rückseite des Grundkörpers aufgebracht ist.

Aus DE 20 2006 004 064 U1 ist eine mit einer Beschriftung und/oder mit Ornamenten versehene Glaskeramikscheibe bekannt, bei der die Schriftzeichen und/oder die Ornamente von im Scheibeninneren mittels eines Laserstrahls hervorgerufenen Strukturänderungen des Scheibenmaterials gebildet sind. Die Schriftzeichen und/oder Ornamente können z.B. ein Firmenlogo bilden. Der Laserstrahl kann mittels eines Rotlasers im Wellenlängenbereich von 1064 nm oder eines Grünlasers im Wellenlängenbereich von 532 nm erzeugt werden.

Hierbei ist es von Nachteil, dass die eingebrachten Laserstrukturen sich häufig nicht kontrastreich gegen ihren Hintergrund absetzen und zudem gestalterisch blass anmuten.

Aus US 5,206,496 sind eine Methode und eine Vorrichtung zur Markierung eines Materialkörpers aus Glas oder Kunststoff unter dessen Oberfläche mittels eines Laserstrahls bekannt. Die Markierung kann - auch dreidimensionale - Zahlen, Buchstaben oder Symbole umfassen. Als ein Laser kann ein Nd-YAG-Laser mit einer Wellenlänge von 1,06 µm und einer Pulslänge von nicht mehr als 1 µs verwendet werden.

DE 10 2008 004 995 B3 offenbart sowohl einen Körper aus Glas mit einer unter der Oberfläche des Körpers angeordneten Markierung, die eine oder mehrere Ziffern, Buchstaben oder Symbole oder eine Kombination davon aufweist, die eine Kennzeichnung ergeben, erzeugt durch einen auf die Oberfläche des Körpers gerichteten Laserstrahl, der den Körper bis zu einer vorbestimmten Tiefe durchdringt und an der Stelle der gewünschten Markierung innerhalb des Glaskörpers fokussierbar ist, und dadurch am Ort der gewünschten Markierung eine Materialveränderung entstehen lässt, die eine sichtbare Veränderung einer sekundär eingebrachten Strahlung zur Folge hat, ohne die Oberfläche des Glaskörpers zu verändern, wobei der Körper aus Glas oberflächengehärtet ist und Bereiche von Druckspannung und Zugspannung aufweist und die Markierung mittels Laserstrahlung in dem unter Druckspannung stehenden Bereich des Glaskörpers erzeugt ist, als auch dessen Verwendung als Beleuchtungselement.

DE 20 2004 015 925 U1 offenbart ein Schichtsystem, insbesondere ein Dekorschichtsystem, umfassend ein Substrat mit einem vorzugsweise transparenten oder transluzenten Material, insbesondere einem Glas, einer Glaskeramik und/oder einem Kunststoff und zumindest einer ersten Schicht, welche dem Schichtsystem dekorierend ein metallisches Aussehen vermittelt, wobei die erste Schicht zumindest eine Metallpartikel enthaltende Trägerschicht umfaßt.

Die Aufgabe der Erfindung besteht darin, die vorstehend genannten Nachteile zu vermeiden und insbesondere eine Platte für ein Haushaltsgerät mit einem durchsichtigen Grundkörper mit einer Laserstruktur bereitzustellen, welche besonders kontrastreich und gestalterisch effektvoll ausgestaltbar ist.

Diese Aufgabe wird gemäß den Merkmalen des unabhängigen Patentanspruchs gelöst. Weiterbildungen der Erfindung ergeben sich auch aus den abhängigen Ansprüchen.

Zur Lösung der Aufgabe wird eine Platte mit einem durchsichtigen Grundkörper für ein Haushaltsgerät vorgeschlagen, bei dem der durchsichtige Grundkörper mindestens eine Laserstruktur aufweist und die mindestens eine Laserstruktur zumindest teilweise mit einer im Wesentlichen lichtundurchlässigen Schicht hinterlegt ist. Dadurch kann eine Rückstrahlung einer in den Grundkörper bis zu der lichtundurchlässigen Schicht eindringenden Lichtstrahlung durch die Eigenschaft der lichtundurchlässigen Schicht, z.B. deren Absorptionsgrad, eingestellt werden, um so einen höheren Kontrast zwischen dieser Rückstrahlung von der lichtundurchlässigen Schicht und einem an der Laserstruktur zurück gestreuten Licht zu erreichen. Auch können durch die lichtundurchlässige Schicht optische Effekte erzeugt werden, welche sich aus der Wechselwirkung der lichtundurchlässigen Schicht mit dem auf sie einfallenden Licht ergeben, z.B. Farbeffekte oder Reflexionseffekte.

Hierbei sind Positionsangaben wie "vor" oder "hinter" aus einer Sicht eines Betrachters mit Blick auf den in das Haushaltsgerät eingebauten Grundkörper zu verstehen ("Betrachtungsoberfläche"). Unter einer Eigenschaft der lichtundurchlässigen Schicht wird insbesondere eine Eigenschaft einer zu dem Körper hin gerichteten Oberfläche verstanden.

Eine Platte in dem oben genannten Sinn weist eine im Vergleich zu ihrer ebenen Ausdehnung geringe Dicke bzw. Höhe auf. Insbesondere kann die ebene Ausdehnung der Platte mindestens zweimal so groß sein wie die Dicke der Platte.

Das Material des Grundkörpers kann beispielsweise Glas, Glaskeramik oder Kunststoff umfassen.

Ferner weist die lichtundurchlässige Schicht für durch den Grundkörper einfallendes Licht einen hohen Absorptionsgrad auf. Somit wird ein Kontrast zwischen der Laserstruktur und dem so besonders stark abgedunkelten Hintergrund erhöht. Dieser Effekt kann dadurch verstärkt werden, dass aufgrund des Vorhandenseins der lichtundurchlässigen Schicht der Grundkörper für einige Anwendungen, z.B. als eine Kochplatte, nicht mehr blickdicht zu sein braucht, wodurch die Laserstruktur heller sichtbar wird.

Der Grundkörper ist farbig und die lichtundurchlässige Schicht weist zumindest an einer Vorderseite die gleiche Farbe auf wie der Grundkörper. So kann ein farbiger Eindruck des Grundkörpers verstärkt werden. Beispielsweise kann der Grundkörper durch eine Zugabe von Rußpartikeln rauchig anmuten, wobei die dem Grundkörper zugewandte Oberfläche der lichtundurchlässigen Schicht z.B. schwarz sein kann. In diesem Fall kann auch die Färbung des Grundkörpers im Vergleich zu einer Ausgestaltung ohne die lichtundurchlässige Schicht schwächer ausfallen, da eine Blickdichtigkeit durch die lichtundurchlässige Schicht gewährleistet ist. Folglich kann der Kontrast zwischen der Laserstruktur und dem von einem Betrachter wahrgenommenen Hintergrund verstärkt werden.

Eine Weiterbildung ist es, dass der durchsichtige Grundkörper ein im Wesentlichen transparenter Körper ist. Dadurch wird - insbesondere zusammen mit einer stark lichtabsorbierenden Schicht - ein besonders hoher Kontrast der Laserstruktur erreicht. Auch sind bei einer Verwendung eines transparenten Grundkörpers optische Effekte der lichtundurchlässigen Schicht besonders gut sichtbar.

Es kann aber auch eine Weiterbildung sein, dass der durchsichtige Grundkörper ein Körper mit einem rauchig-schwärzlichen Grundton und mit einer Blickdurchlässigkeit mindestens bis zu der lichtundurchlässigen Schicht ist. Dadurch wird eine Sichtbarkeit der lichtundurchlässigen Schicht erschwert, eine solide Anmutung erzeugt und die Betrachtungsoberfläche gut erkennbar.

Auch ist es eine erfindungsgemäße Weiterbitdung, dass die lichtundurchlässige Schicht eine Bedruckung ist. Eine Bedruckung, die mittels eines Druckverfahrens wie mittels eines Siebdrucks auf den Grundkörper aufgebracht werden kann, ist eine besonders einfache und preiswerte Möglichkeit der Aufbringung der lichtundurchlässigen Schicht und kann zudem besonders einfach und farblich genau eingestellt werden. Auch ist eine strukturierte Bedruckung, d.h. eine nicht vollflächige Bedruckung, einfach umzusetzen.

Alternativ ist die lichtundurchlässige Schicht eine Beschichtung. Die Beschichtung kann mittels eines chemischen und/oder eines physikalischen Beschichtungsverfahrens aufgebracht werden, z.B. mittels einer chemischen Gasphasenabscheidung (CVD) und/oder einer physikalischen Gasphasenabscheidung (PVD). Dadurch können besonders dünne und widerstandsfähige Schichten erzeugt werden. Die Beschichtung kann aus einer oder mehreren Schichten bestehen, wobei auch funktional unterschiedliche Schichten verwendet werden können, z.B. eine optisch wirksame Schicht, eine Haftschicht, eine Abriebwiderstandsschicht, eine Wärmespreizungsschicht usw.

Eine nächste Weiterbildung kann darin bestehen, dass die Platte als eine Kochplatte ausgestaltet ist. Diese Platte kann insbesondere eine Kochplatte eines Induktionsherds ("Induktionskochplatte") sein, da eine Induktionskochplatte im Vergleich z.B. zu einer mit einem Heizstrahler ausgerüsteten Kochplatte bei einem Betrieb wenig erwärmt wird und so auch eine in nur geringem Maße wärmeresistente lichtundurchlässige Schicht ausreicht. Mittels der mindestens einen Laserstruktur kann beispielsweise zumindest teilweise auf ein bisher verwendetes aufgedrucktes Dekor verzichtet werden, z.B. für eine Kennzeichnung von Kochstellen. Eine solche Kochplatte ist widerstandsfähiger gegenüber einer Oberflächenbehandlung und sieht auch hochwertiger aus. Das hochwertige Aussehen kann durch eine Verwendung einer dreidimensionalen Laserstruktur noch verstärkt werden.

Jedoch ist die Platte nicht auf eine Verwendung als eine Kochplatte beschränkt, sondern kann beispielsweise auch für Anzeigen oder Bedienelemente verwendet werden. So kann die Platte als ein frontseitiger Abschluss eines Tasters oder eines Drehknebels dienen, wobei die mindestens eine Laserstruktur die Funktion bisher verwendeter Bedruckungen übernehmen kann. Die Platte braucht keine plane Oberfläche(n) aufzuweisen, sondern kann z.B. auch zumindest bereichsweise eine gekrümmte Oberfläche aufweisen.

Die lichtundurchlässige Schicht kann auch bereichsweise unterschiedlich ausgestaltet sein, z.B. mit einer ersten Farbe oder einem ersten optischen Effekt direkt hinter der Laserstruktur und einer zweiten Farbe oder einem zweiten optischen Effekt in einem Bereich, der sich nicht direkt hinter der Laserstruktur befindet. Die lichtundurchlässige Schicht kann aber auch direkt hinter der Laserstruktur optisch unterschiedlich ausgestaltete Bereiche aufweisen.

Eine nächste Ausgestaltung ist es, dass die Laserstruktur an einer vorderen Oberfläche (der Betrachtungsoberfläche) des Grundkörpers angeordnet ist. Eine solche Laserstruktur ist besonders einfach herstellbar und zudem nachträglich oberflächenbehandelbar. Sie ist zudem besonders präzise mit einer lichtundurchlässigen Schicht hinterlegbar.

Auch ist es eine Ausgestaltung, dass die Laserstruktur an einer hinteren, der Betrachtungsoberfläche entgegengesetzten, Oberfläche des Grundkörpers angeordnet ist. Auch eine solche Laserstruktur ist einfach herstellbar und nachträglich oberflächenbehandelbar.

Eine weitere Ausgestaltung ist es, dass die Laserstruktur innerhalb des Grundkörpers angeordnet ist. Dadurch wird ein besonders widerstandsfähiger (weil abrieb- und korrosionsgeschützter) und verschmutzungsfreier Körper bereitgestellt. Eine solche Ausgestaltung ist insbesondere bei verschmutzungsgefährdeten Platten wie Kochplatten usw. von Vorteil.

Ein Verfahren zur Herstellung der Platte umfasst, dass die Laserstruktur mittels mindestens eines Rotlasers erzeugt wird. Es hat sich herausgestellt, dass ein Rotlaser besonders gut zur Einbringung hochaufgelöster Laserstrukturen geeignet ist.

Zur Einbringung hochaufgelöster Laserstrukturen in den Grundkörper kann es auch eine vorteilhafte Ausgestaltung sein, dass die Laserstruktur mit Hilfe von Laserpulsen mit einer Pulsdauer von maximal 8 ns erzeugt wird.

Zur Einbringung hochaufgelöster Laserstrukturen in den Grundkörper kann es eine weitere Ausgestaltung sein, dass die Laserstruktur mittels eines Laserstrahls erzeugt wird, welcher im Wesentlichen einem Gauß-Strahl (Gaußschem Bündel) entspricht. Ein Gauß-Strahl zeichnet sich durch ein transversales Profil gemäß einer Gauß-Kurve und ein longitudinales Lorentz-Profil aus.

Ausführungsbeispiele der Erfindung werden nachfolgend anhand der Zeichnungen schematisch dargestellt und erläutert. Dabei können zur besseren Übersichtlichkeit gleiche oder gleichwirkende Elemente mit gleichen Bezugszeichen versehen sein.

Es zeigen:
- Fig.1: als Schnittdarstellung in Seitenansicht einen Ausschnitt aus einer Platte in Form einer Induktionskochplatte gemäß einer ersten Ausführungsform;
- Fig.2: als Schnittdarstellung in Seitenansicht einen Ausschnitt aus einer Platte in Form einer Induktionskochplatte gemäß einer zweiten Ausführungsform; und
- Fig.3: als Schnittdarstellung in Seitenansicht einen Ausschnitt aus einer Platte in Form einer Induktionskochplatte gemäß einer dritten Ausführungsform.

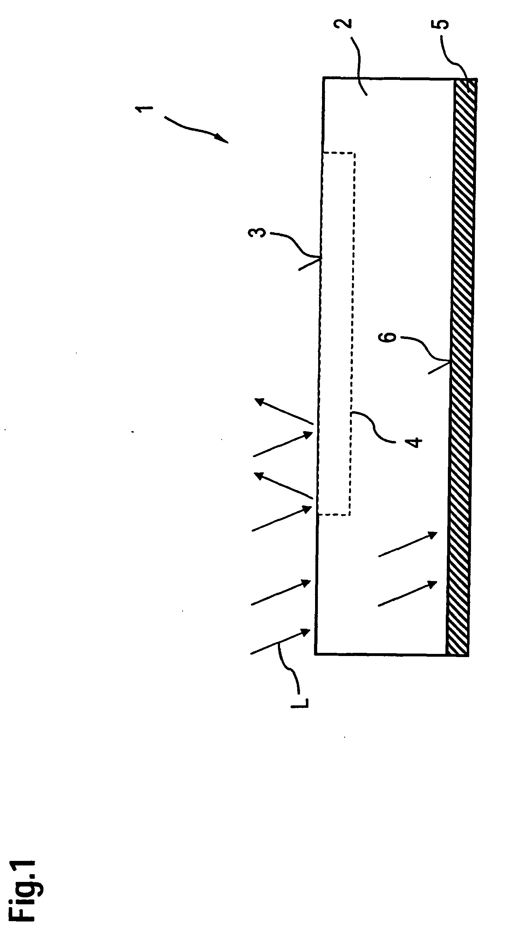

Fig.1 zeigt als Schnittdarstellung in Seitenansicht einen Ausschnitt aus einer Platte 1 gemäß einer ersten Ausführungsform in Form einer Induktionskochplatte. Die Platte 1 weist einen plattenförmigen Glaskeramik-Grundkörper 2 auf. Der Grundkörper 2 ist so in ein Induktionskochfeld eingebaut, dass auf dessen vordere Oberfläche bzw. Oberseite 3, welche eine Betrachtungsoberfläche darstellt, Licht L einfallen kann. Zur Herstellung eines vertrauten Anblicks für einen Benutzer des Induktionskochfelds hat der Grundkörper 2 einen rauchig-schwärzlichen Grundton.

In einem Teilbereich seiner Oberseite 3 ist eine Laserstruktur 4 eingebracht, die hier gestrichelt angedeutet ist. An der Rückseite des Grundkörpers 2 ist eine lichtundurchlässige Schicht 5 so angebracht, dass deren eine Oberfläche 6 flächig an der Rückseite des Grundkörpers 2 aufliegt. Zur Verstärkung des dunklen Aussehens der Platte 1 ist die Oberfläche 6 der lichtundurchlässigen Schicht 5 hochgradig lichtabsorbierend.

Bei einem Einfall des Lichts L auf die Oberseite 3, wie hier durch die Pfeile angedeutet, strahlt ein Teil davon bis zu der Oberfläche 6 der lichtundurchlässigen Schicht 5. Dort wird das Licht weitgehend absorbiert, so dass die Platte 1 für einen Betrachter, welcher auf die Oberseite 3 sieht, dunkel erscheint. Lediglich an der Laserstruktur 4 wird das Licht L zumindest teilweise reflektiert, so dass diese Laserstruktur 4 vergleichsweise hell wirkt. Dadurch ergibt sich insgesamt ein hoher Kontrast zwischen dem durch die lichtundurchlässige Schicht 5 gebildeten Hintergrund und der Laserstruktur 4. Dieser Kontrast ist besonders stark ausgeprägt, da die Laserstruktur 4 in die Oberseite 3 eingebracht ist, so dass das auf die Laserstruktur einfallende Licht nicht in dem Grundkörper 2 gestreut oder absorbiert wird.

Die lichtundurchlässige Schicht 5 ist hier als eine Bedruckung durch Siebdruck auf die Rückseite des Grundkörpers 2 aufgebracht worden. Die Laserstruktur 4 wurde als eine dreidimensionale Laserstruktur 4 mittels eines Rotlasers mit einer Wellenlänge von 1064 nm und einer Pulsdauer von maximal 8 ns eingebracht. Der Laserstrahl entsprach im Wesentlichen einem Gauß-Strahl.

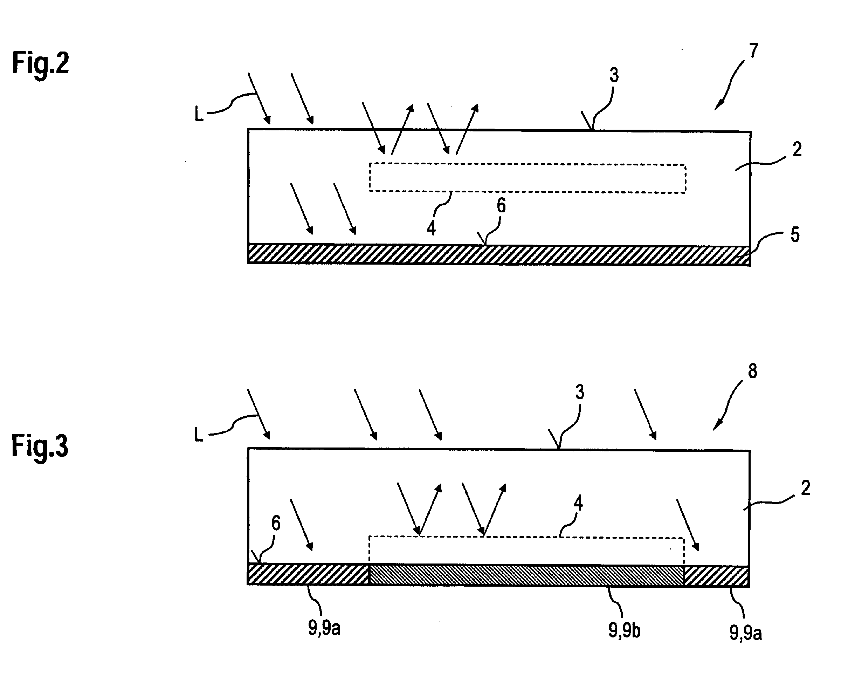

**Fig.2** zeigt in einer zu **Fig.1** analogen Darstellung einen Ausschnitt aus einer Platte 7 gemäß einer zweiten Ausführungsform. Im Gegensatz zu der ersten Ausführungsform ist die dreidimensionale Laserstruktur 4 nun innerhalb des Grundkörpers 2 ausgebildet.

Dabei wird die Laserstruktur 4 in der Regel etwas weniger hell wirken als in der ersten Ausführungsform, da ein kleiner Teil des auf sie gerichteten Lichts L an der Oberfläche 3 reflektiert wird und auf dem Weg zu der Laserstruktur in dem Grundkörper 2 absorbiert oder gestreut werden. Andererseits ergibt sich der erhebliche Vorteil, dass die Laserstruktur 4 vor einer mechanischen und chemischen Abnutzung geschützt ist, so wie sie häufig bei einer Reinigung der Oberseite 3 der Platte 1 und damit des Grundkörpers 2 aufgrund von Reinigungsmitteln und/oder Reinigungsbürsten usw. auftritt.

Auch für diese zweite Ausführungsform hat es sich herausgestellt, dass eine Herstellung der Laserstruktur 4 mittels eines Rotlasers mit einer Wellenlänge von 1064 nm und einer Pulsdauer von maximal 8 ns mit einem Gauß-Strahl besonders einfach war.

**Fig.3** zeigt in einer zu **Fig.1** und **Fig.2** analogen Darstellung einen Ausschnitt aus einer Platte 8 gemäß einer dritten Ausführungsform. Im Gegensatz zu den ersten beiden Ausführungsformen ist die Laserstruktur 4 nun an einer hinteren Oberfläche bzw. Rückseite des Grundkörpers 2 ausgebildet. Dabei wird die Laserstruktur 4 ohne weitere Maßnahmen noch dunkler wirken als bei der zweiten Ausführungsform, jedoch ebenfalls vor einer mechanischen und chemischen Abnutzung aufgrund einer Nutzung und Reinigung der Oberfläche geschützt sein.

Insbesondere in diesem Fall kann die lichtundurchlässige Schicht 9 mindestens zwei unterschiedliche Teilbereiche 9a, 9b aufweisen. Der erste Teilbereich 9a entspricht in seinen Eigenschaften, insbesondere dem hohen Absorptionsgrad, der lichtundurchlässigen Schicht 5 aus **Fig.1** oder **Fig.2****.** Der erste Teilbereich 9a ist seitlich hinter der Laserstruktur 4 angeordnet. Der zweite Teilbereich 9b ist bezüglich des auf ihn einfallenden Lichts L reflektierend. Der zweite Teilbereich 9b ist direkt hinter der Laserstruktur 4 angeordnet. Dadurch wird das Licht L, dass durch die Laserstruktur 4 hindurch läuft, wieder durch die Laserstruktur 4 zurückgespiegelt, so dass der zweite Teilbereich 9b wie eine Hintergrundbeleuchtung für die Laserstruktur 4 dient. Dieser Effekt kann die geringere Beleuchtung der Laserstruktur 4 zumindest zum Teil ausgleichen. Auch können der erste Teilbereich 9a und der zweite Teilbereich 9b eine unterschiedliche Farbe oder Struktur aufweisen, so dass sich die Laserstruktur 4 für einen Betrachter auch farbig oder optisch noch anders von seinem seitlichen Hintergrund abhebt.

Die Erfindung ist nicht auf die vorliegenden Ausführungsbeispiele beschränkt.

So kann die Platte auch als eine Abdeckplatte an anderen Stellen unterschiedlicher Haushaltsgeräte angebracht werden.

Ferner können mehrere Laserstrukturen in den Grundkörper eingebracht werden, auch an unterschiedlichen Höhenpositionen, d.h., vorderseitig, rückseitig oder in dem Grundkörper.

### Bezugszeichenliste

- 1: Platte
- 2: Grundkörper
- 3: Oberseite
- 4: Laserstruktur
- 5: lichtundurchlässige Schicht
- 6: Oberfläche der lichtundurchlässigen Schicht
- 7: Platte
- 8: Platte
- 9: lichtundurchlässige Schicht
- 9a: erster Teilbereich der lichtundurchlässigen Schicht
- 9b: zweiter Teilbereich der lichtundurchlässigen Schicht
- L: Licht

## Patentansprüche

1. Platte (1; 7; 8) mit einem durchsichtigen Grundkörper (2) für ein Haushaltsgerät, wobei der durchsichtige Grundkörper (2) mindestens eine als Ornament ausgestaltete dreidimensionale Laserstruktur (4) aufweist, wobei die mindestens eine Laserstruktur (4) zumindest teilweise mit einer im Wesentlichen lichtundurchlässigen Schicht (5; 9) hinterlegt ist, die als Beschichtung oder Bedruckung auf eine Rückseite des Grundkörpers (2) aufgebracht ist, **dadurch gekennzeichnet, dass** der durchsichtige Grundkörper (2) farbig ist und die lichtundurchlässige Schicht (5;9):
a. zumindest an einer Vorderseite die gleiche Farbe aufweist wie der Grundkörper, und
b. für durch den Grundkörper (2) einfallendes Licht (L) einen hohen Absorptionsgrad aufweist.

2. Platte nach Anspruch 1, **dadurch gekennzeichnet, dass** der durchsichtige Grundkörper ein im Wesentlichen transparenter Grundkörper ist.

3. Platte (1; 7; 8) nach einem der Ansprüche 1 oder 2, **dadurch gekennzeichnet, dass** der durchsichtige Grundkörper (2) ein Grundkörper (2) mit einem rauchig-schwärzlichen Grundton und mit einer Blickdurchlässigkeit mindestens bis zu der lichtundurchlässigen Schicht (5; 9) ist.

4. Platte (1; 7; 8) nach einem der vorhergehenden Ansprüche, **dadurch gekennzeichnet, dass** sie als eine Kochplatte, insbesondere Induktionskochplatte, ausgestaltet ist.

5. Platte (1) nach einem der vorhergehenden Ansprüche, **dadurch gekennzeichnet, dass** die Laserstruktur (4) an einer vorderen Oberfläche (3) des Grundkörpers (2) angeordnet ist.

6. Platte (8) nach einem der Ansprüche 1 bis 4, **dadurch gekennzeichnet, dass** die Laserstruktur (4) an einer hinteren Oberfläche des Grundkörpers (2) angeordnet ist.

7. Platte (7) nach einem der Ansprüche 1 bis 4, **dadurch gekennzeichnet, dass** die Laserstruktur (4) innerhalb des Grundkörpers (2) angeordnet ist.

## Claims

1. Plate (1; 7; 8) having a translucent base body (2) for a domestic appliance, wherein the translucent base body (2) has at least one three-dimensional laser structure (4) embodied as an ornament, wherein the at least one laser structure (4) is deposited at least partially with an essentially non-translucent layer (5; 9) which is applied as a coating or printing to a rear side of the base body (2), **characterised in that** the translucent base body (2) is coloured and the non-translucent layer (5; 9):
a. has the same colour as the base body at least on a front side, and
b. has a high absorption coefficient for light (L) falling through the base body (2).

2. Plate according to claim 1, **characterised in that** the translucent base body is an essentially transparent base body.

3. Plate (1; 7; 8) according to one of claims 1 or 2, **characterised in that** the translucent base body (2) is a base body (2) with a smoky-black base shade and with the ability to see at least up to the non-translucent layer (5; 9).

4. Plate (1; 7; 8) according to one of the preceding claims, **characterised in that** it is embodied as a hob, in particular an induction hob.

5. Plate (1) according to one of the preceding claims, **characterised in that** the laser structure (4) is disposed on a front surface (3) of the base body (2).

6. Plate (8) according to one of claims 1 to 4, **characterised in that** the laser structure (4) is disposed on a rear surface of the base body (2).

7. Plate (7) according to one of claims 1 to 4, **characterised in that** the laser structure (4) is disposed within the base body (2).

## Revendications

1. Plaque (1 ; 7 ; 8) comprenant un corps de base transparent (2) pour un appareil ménager, le corps de base transparent (2) présentant au moins une structure laser (4) tridimensionnelle réalisée comme ornement, l'au moins une structure laser (4) ayant dans le fond une couche (5 ; 9) essentiellement imperméable à la lumière au moins par sections, laquelle est appliquée comme revêtement ou impression sur une face arrière du corps de base (2), **caractérisée en ce que** le corps de base transparent (2) est coloré et **en ce que** la couche (5 ; 9) imperméable à la lumière :
a. présente au moins sur une face avant la même couleur que le corps de base, et
b. présente un degré d'absorption élevé pour la lumière (L) incidente traversant le corps de base (2).

2. Plaque selon la revendication 1, **caractérisée en ce que** le corps de base transparent est un corps de base essentiellement transparent.

3. Plaque (1 ; 7 ; 8) selon l'une quelconque des revendications 1 ou 2, **caractérisée en ce que** le corps de base transparent (2) est un corps de base (2) ayant une teinte de fond noir-fumé et une perméabilité visuelle au moins jusqu'à la couche (5 ; 9) imperméable à la lumière.

4. Plaque (1 ; 7 ; 8) selon l'une quelconque des revendications précédentes, **caractérisée en ce qu'**elle est réalisée en tant qu'une plaque de cuisson, notamment une plaque de cuisson à induction.

5. Plaque (1) selon-l'une quelconque des revendications précédentes, **caractérisée en ce que** la structure laser (4) est disposée sur une surface avant (3) du corps de base (2).

6. Plaque (8) selon l'une quelconque des revendications 1 à 4, **caractérisée en ce que** la structure laser (4) est disposée sur une surface arrière du corps de base (2).

7. Plaque (7) selon l'une quelconque des revendications 1 à 4, **caractérisée en ce que** la structure laser (4) est disposée à l'intérieur du corps de base (2).
